# EUROPÄISCHE PATENTSCHRIFT

(11) **EP 3 115 421 B1**
(45) Veröffentlichungstag und Bekanntmachung des Hinweises auf die Patenterteilung: **03.03.2021**
(21) Anmeldenummer: 15175504.8
(22) Anmeldetag: 06.07.2015
(51) Int. Cl.: C09D 5/00

(54) **AKTIVE ANTI-EIS-BESCHICHTUNG, BESCHICHTUNGSMATERIAL SOWIE HERSTELLVERFAHREN ZUM HERSTELLEN DERSELBEN**
ACTIVE ANTI-ICE COATING, COATING MATERIAL AND PRODUCTION METHOD FOR PRODUCING THE SAME
REVÊTEMENT ANTI-GIVRE ACTIF, MATÉRIAU DE REVÊTEMENT AINSI QUE PROCÉDÉ DE FABRICATION POUR LA FABRICATION DE CELUI-CI

(43) Veröffentlichungstag der Anmeldung: 11.01.2017
(73) Patentinhaber: Airbus Defence and Space GmbH, 82024 Taufkirchen (DE); AIRBUS HELICOPTERS DEUTSCHLAND GmbH, 86609 Donauwörth (DE)
(72) Erfinder: STROBL, Tobias, 80333 München (DE); RAPS, Dominik, 86633 Neuburg (DE); ZAHOUILY, Khalid, 68460 Lutterbach (FR); RIESS, Gerard, 68200 Mulhouse (FR)

(56) Entgegenhaltungen:
- DE-A1- 19 906 008
- DE-A1-102012 202 517
- US-A1- 2013 101 800
- US-A1- 2015 152 270

## Beschreibung

Die Erfindung betrifft eine aktive Anti-Eis-Beschichtung, die zur Abgabe eines Anti-Eis-Mittels fähig ist. Weiter betrifft die Erfindung ein Beschichtungsmaterial zum Bilden einer solchen Anti-Eis-Beschichtung sowie ein Verfahren zum Herstellen eines solchen Anti-Eis-Beschichtungsmaterials. Außerdem betrifft die Erfindung ein Verfahren zum Herstellen einer Anti-Eis-Beschichtung mittels eines derartigen Anti-Eis-Beschichtungsmaterials sowie ein Fahrzeug, ein Luftfahrzeug, ein Rotor oder eine Windkraftanlage, die einen mit einer derartigen Anti-Eis-Beschichtung versehenen Oberflächenbereich hat.

Zum technologischen Hintergrund und zum Stand der Technik wird auf die WO 2012/003004 A2, die US 2002/0139956 A1, die US 8 647 709 B2, die WO 2010/127981 A1, die US 2011/0039066 A1, die US 2012/0045954 A1, die WO 2014/095112 A1 sowie die US 2014/0127516 A1 und die US 2012/0244287 A1 verwiesen. Die folgende Beschreibung baut auf den Wissensstand aus diesen Druckschriften auf.

Bei strömungsdynamischen Körpern, die unter atmosphärischen Bedingungen betrieben werden, wie dies beispielsweise bei Rotorblättern von Luftfahrzeugen oder Windkraftanlagen oder bei strömungsdynamisch wirksamen Oberflächen von Flugzeugen oder dergleichen Luftfahrzeugen der Fall ist, gibt es die Gefahr eines Aufbaus einer Eisschicht und der daraus sich bedingenden Verschlechterung der strömungsdynamischen Eigenschaften. Daher ist es bekannt, für derartige strömungsdynamische Körper Schutzmaßnahmen gegen Eisbildung vorzusehen. Eine mögliche Schutzmaßnahme ist, die entsprechenden Oberflächenbereiche, an denen die Gefahr von Eisaufbau besteht, mit einer Anti-Eis-Beschichtung zu versehen. Die meisten der bekannten Anti-Eis-Beschichtungen sind passiv, d.h. sie zeigen eine gewisse inhärente hydrophobe und Eis-phobe Eigenschaft aufgrund eines hohen Kontaktwinkels und/oder eines guten Wasserabrollverhaltens. Ein wesentlicher Nachteil dieser rein passiven Anti-Eis-Beschichtungen ist allerdings das relativ hohe Risiko einer Vereisung bei sehr kalten Bedingungen. Unter aktiven Anti-Eis-Beschichtungen werden Beschichtungen verstanden, die zur Abgabe eines Anti-Eismittels fähig sind. Anti-Eismittel sind Stoffe, Verbindungen, Gemische oder Gemenge, die eine gefrierpunktherabsetzende Eigenschaft haben. Derartige aktive Beschichtungen können Vereisungen auch unter kalten Bedingungen von minus 10°C und tiefer vermeiden.

Passive Anti-Eis-Eigenschaften für Beschichtungen können nach dem Stand der Technik erhalten werden z.B. durch superhydrophobische Polymere - siehe z.B. US 2012/0045954 A1 - oder durch Oberflächenstrukturierungen, beispielsweise auf nanoskopischem oder mikroskopischem Level, wie dies z.B. in der WO 2014/095112 A1 gezeigt ist.

Aktive Anti-Eis-Beschichtungen können durch Beschichtungen erreicht werden, die insbesondere Anti-Eis-Flüssigkeiten - siehe beispielsweise die US 2012/0244287 A1, die US 8 647 709 B2 oder die US 2002/0139956 A1 - oder Anti-Eis-Proteine - siehe beispielsweise WO 2010/127981 A1 oder US 2011/0039066 A1 - freigeben können.

Ein weiteres Beispiel für eine aktive Anti-Eis-Beschichtung ist die unter dem Handelsnamen "IcePhob ESL" von der Fa. Microphase auf dem Markt erhältliche Beschichtung.

Derzeit bekannte aktive Anti-Eis-Beschichtungen zeigen einen nur geringen Erosionswiderstand und auch ein schnelles Auslaugen des aktiven Mittels, wie z.B. Anti-Eis-Protein oder Anti-Eis-Flüssigkeit. Tatsächlich ist so die Lebensdauer der Beschichtung sehr begrenzt und sehr schwer vorauszusagen.

US 2015/0152270 offenbart selbstheilende, glitschige selbstschmierende Polymere, die ein spezifisches Polymer und eine darauf abgestimmte schmierende Flüssigkeit mit Affinität für das Polymer umfassen. Unter Affinität wird verstanden, dass das Polymer und die Flüssigkeit entweder beide hydrophob oder beide hydrophil sind. Beispielhaft wird die Kombination aus hydrophobem PDMS und hydrophobem Siliconöl angegeben.

Die Erfindung hat sich zur Aufgabe gestellt, eine aktive Anti-Eis-Beschichtung ohne die vorerwähnten Nachteile zu ermöglichen.

Diese Aufgabe wird durch eine aktive Anti-Eis-Beschichtung nach Anspruch 1 sowie ein Beschichtungsmaterial und die Herstellverfahren nach den weiteren unabhängigen Ansprüchen gelöst.

Vorteilhafte Verwendungen einer so herstellbaren Beschichtung sind in dem weiteren Nebenanspruch angegeben.

Gemäß einem ersten Aspekt schafft die Erfindung eine aktive Anti-Eis-Beschichtung, die zur Abgabe eines Anti-Eismittels fähig ist, mit in einem UV-härtbaren Matrixmaterial eingebettete Anti-Eis-Mittel- Reservoiren. Die in dem Matrixmaterial eingebetteten Anti-Eis-Mittel-Reservoire sind aus einem UV-härtbaren Material gebildet, in dem eine Anti-Eis-Flüssigkeit (16) eingefangen oder eingeschlossen ist.

Es ist bevorzugt, dass die Anti-Eis-Beschichtung 3 bis 20 Gew.-%, mehr bevorzugt 5 bis 20 Gew.-% Anti-Eis-Flüssigkeit als Anti-Eis-Mittel umfasst.

Relativ zu der UV-härtbaren Matrix kann die Anti-Eis-Flüssigkeit bei einer bevorzugten Ausführungsform 1 bis 25 % (bezogen auf die Masse der Anti-Eis-Flüssigkeit) Copolymer-Tenside aufweisen.

Es ist bevorzugt, dass das UV-härtbare Matrixmaterial umfasst:
60 - 80 Gew.-% Polyurethandiacrylate und
20 - 40 Gew.-% Monomere,
wobei bezogen auf die Gesamtmasse von Polyurethandiacrylaten und Monomeren
0,5 - 5 Gew.-% Photoinitiatoren und
0 - 2 Gew.-% Zusatzstoffe vorgesehen sind.

Die Polyurethandiacrylate (PUAs) können als eine Sorte eines Polyurethandiacrylats oder als Mischung von PUAs vorliegen.

Auch können eine Sorte oder eine Mischung von Monomeren vorgesehen sein.

In einer bevorzugten Ausführungsform führt eine Kombination einer Anti-Eis-Flüssigkeitsphase mit einer flüssigen UV-härtbaren Matrixphase zur Bildung einer nicht-wässrigen Emulsion, die durch ein Copolymer stabilisiert ist. Ein UV-Härten dieses Systems führt vorzugsweise zu einer festen Matrixbeschichtung mit dispergiertem Anti-Eis-Fluid.

Die in dem Matrixmaterial eingebetteten Anti-Eis-Mittel-Reservoire sind aus oder mit einem weiteren UV-härtbaren Material gebildet. Es sind Anti-Eis-Mittelreservoire vorgesehen, bei denen eine Anti-Eis-Flüssigkeit in UV-härtbarem Material oder in UV-härtbaren Materialien eingeschlossen oder gefangen sind. Gemäß einem Ausführungsbeispiel ist eine Anti-Eis-Flüssigkeit in einem UV-härtbarem Netzwerk eingeschlossen, das im Folgenden als Gycogel bezeichnet wird.

Gemäß einem weiteren Aspekt schafft die Erfindung ein Beschichtungsmaterial zum Bilden einer Anti-Eis-Beschichtung, umfassend eine nicht-wässrige photopolymerisierbare Emulsion mit einem flüssigen photopolymerisierbaren Matrixmaterial als eine erste Phase und einem photopolymerisierbaren Gel, das Anti-Eis-Flüssigkeit enthält, als eine zweite Phase.

Es ist bevorzugt, dass die zweite Phase Block-Copolymer-Tenside enthält. Vorzugsweise ist die zweite Phase auf Basis von PEG aufgebaut. Mehr insbesondere ist enthält die zweite Phase PEG und Photoinitiatoren.

Gemäß einem weiteren Aspekt betrifft die Erfindung ein Verfahren zum Herstellen eines Anti-Eis-Beschichtungsmaterials zum Bilden einer Anti-Eis-Beschichtung, umfassend:
a) Bereitstellen eines flüssigen photopolymerisierbaren Matrixmaterials,
b) Bereitstellen eines Anti-Eis-Mittels durch Bereitstellen einer Anti-Eis-Flüssigkeit (16) und eines UV-härtbaren Gelbildnermaterials und Synthetisieren eines UV-härtbaren Gels, das die Anti-Eis-Flüssigkeit enthält,
c) Einbringen des Anti-Eis-Mittels in das flüssige photopolymerisierbareMatrixmaterial.

Es ist bevorzugt, dass Schritt a) enthält: Bereitstellen des Matrixmaterials derart, dass es 80 bis 97 Gew.-%, mehr bevorzugt 80 - 95 Gew.-% des Anti-Eis- Beschichtungsmaterials ausmacht.

Es ist bevorzugt, dass Schritt a) enthält: Bereitstellen eines Matrixmaterials, enthaltend:
60 - 80 Gew.-% Polyurethandiacrylate und
20 - 40 Gew.-% Monomere,
wobei bezogen auf das Gesamtgewicht von Polyurethandiacrylat und Monomeren 0,5 - 5 Gew.-% Photoinitiatoren und
0 - 2 Gew.-% Additive vorgesehen oder hinzugefügt werden.

Die Polyurethandiacrylate (PUAs) können eine Sorte eines Polyurethandiacrylats oder eine Mischung von PUAs sein.

Auch können eine Sorte oder eine Mischung von Monomeren vorgesehen sein.

Schritt b) enthält: Bereitstellen eines UV-härtbaren Gelbildnermaterials.

Schritt b) enthält: Bereitstellen einer Anti-Eis-Flüssigkeit.

Schritt b) enthält: Synthetisieren eines UV-härtbaren Gels, das Anti-Eis-Flüssigkeit enthält, einschließt oder einkapselt.

Es ist bevorzugt, dass ein Matrixmaterial enthaltend 80 - 95 Gew.-% Polyurethan-Acrylate und Monomere, 0,5 - 5 Gew.-% Photoinitiatoren und 0 - 2 Gew.-% Zusatzstoffe bereitgestellt wird.

Es ist bevorzugt, dass der Anteil von Anti-Eis-Flüssigkeit in dem Anti-Eis-Mittel wie z.B. in einem nicht-wässrigen Gel 80-90 Gew.-% beträgt. Vorzugsweise werden 80-90 Gew.-% Anti-Eis-Flüssigkeit, wie z.B. Ethylenglycol (EG), und 10 - 20 Gew.-% UV-härtbare Monomere zum Bilden eines Gels verwendet.

Es ist bevorzugt, dass ein UV-härtbares Glycogel (insbesondere auf PEG-Basis) mit durch Tenside eingefangener oder eingeschlossener Anti-Eis-Flüssigkeit als Anti-Eis-Mittel gebildet wird.

Eine bevorzugte Ausgestaltung des Verfahrens enthält: Bilden einer photopolymerisierbaren nicht-wässrigen Emulsion mit einem photopolymerisierbaren flüssigen Matrixmaterial als erste Phase und einem photopolymerisierbaren Gelmaterial als zweite Phase, in dem eine Anti-Eis-Flüssigkeit eingebettet oder eingeschlossen ist.

Vorzugsweise werden 10 - 20 Gew.-% des Gels und 80 - 90 Gew.-% des Matrixmaterials zum Bilden der Emulsion verwendet.

Gemäß einem weiteren Aspekt betrifft die Erfindung ein Verfahren zum Herstellen einer Anti-Eis-Beschichtung, umfassend: Durchführen des Verfahrens zum Herstellen des Beschichtungsmaterials gemäß einer der voranstehenden Ausgestaltungen zum Bereitstellen von Beschichtungsmaterial oder Bereitstellen eines Beschichtungsmaterials, wie oben gemäß einer der bevorzugten Ausgestaltungen spezifiziert, und Aufbringen des Beschichtungsmaterials auf eine zu beschichtende Oberfläche und UV-Aushärten des Beschichtungsmaterials.

Gemäß einem weiteren Aspekt betrifft die Erfindung ein Fahrzeug, ein Luftfahrzeug oder einen Rotor oder eine Windkraftanlage, umfassend einen Oberflächenbereich, der mit einer derartigen Anti-Eis-Beschichtung beschichtet ist.

Ein besonderer Aspekt der Erfindung betrifft UV-härtbare zweiphasige Anti-Eis-Beschichtungen und Verfahren zum Herstellen derselben.

Eine bevorzugte Ausgestaltung basiert auf einer photopolymerisierbaren, nicht-wässrigen Emulsion, wobei die Matrixphase aus einem photopolymerisierbaren System - wie z.B. radikale, kationische und/oder Hybrid-Systeme - aufgebaut ist und der dispergierte Teil aus UV-härtbaren Reservoirsystemen aufgebaut ist, die Anti-Eis-Flüssigkeiten enthalten. Die aus derartigen nicht-wässrigen Emulsionen entwickelten Beschichtungen führten zu guten Anti-Eis-Eigenschaften als auch guten schlagwiderstandsfähigen Eigenschaften. Das aktive Mittel ist eingeschlossen, eingefangen oder eingekapselt, so dass eine zu schnelle Abgabe begrenzt wird und so dass die Mittel nicht die mechanischen Eigenschaften der Beschichtungen reduzieren.

Ein Vorteil der Beschichtung gemäß der Erfindung ist die Kombination von smarten aktiven Anti-Eis-Fähigkeiten und einem hohen Erosionswiderstand.

Die UV-härtbaren Reservoirbeschichtungen, die von derartigen Zwei-Phasen-Systemen entwickelt worden sind, haben weitere Vorteile einer progressiven Abgabe von Anti-Eis-Flüssigkeiten, was die Anti-Eis-Eigenschaften für eine lange Zeit sicherstellt. Neben diesem Vorteil einer verzögerten kontrollierten Abgabe gibt es den weiteren Vorteil, dass die Auswahlmöglichkeiten von Anti-Eis-Mittel viel größer als bei konventionellen Beschichtungen sind, da die Beschichtungsmatrix selbst nur teilweise in Kontakt mit dem eisunterdrückenden Zusatzstoff ist. Als ein positiver Seiteneffekt ist zu verzeichnen, dass der Erosionswiderstand der Beschichtungen gemäß der Erfindung viel höher als bei derzeit kommerziell erhältlichen Beschichtungen ist. Die verbesserten Anti-Eis-Eigenschaften und Enteisungseigenschaften und die Erhöhung der Erosionswiderstände sind in Laboruntersuchungen und in Eis-Windtunneltests mit kleinem Maßstab und bei Erosionstests bestätigt worden.

Es sind mehrphasige photohärtbare Beschichtungen mit Anti-Eis-, Anti-Erosions- und Stoßwiderstands-Eigenschaften entwickelt worden, die auf einer umweltfreundlichen nicht-wässrigen Emulsion basieren. Die Beschichtungen wurden entworfen und Formulierungen sind produziert worden und auf Aluminiumpaneels aufgetragen worden. Windtunneltests auf Labormaßstab sind ausgeführt worden. Dabei zeigten erste Beschichtungsformulierungen für Anti-Eis-Tests vielversprechende Anti-Eis-Eigenschaften. Das Beschichtungsmaterial lässt sich wie andere UV-härtbare Beschichtungen verwenden.

Ausführungsbeispiele der Erfindung werden nachfolgend anhand der beigefügten Zeichnungen näher erläutert. Darin zeigt:
- Fig. 1: eine schematische Darstellung eines Herstellverfahrens für eine UV-härtbare Anti-Eis-Beschichtung;
- Fig. 2: eine schematische Darstellung eines ersten Schritts eines weiteren Herstellverfahrens für eine UV-härtbare Anti-Eis-Beschichtung, wobei Fig. 2 eine Syntheseprozedur für ein Glycogel zeigt, bei dem eine Anti-Gefrier-Flüssigkeit in einer UV-härtbaren Matrix gefangen ist;
- Fig. 3: einen zweiten Schritt des weiteren Herstellverfahrens;
- Fig. 4: eine schematische Darstellung einer Herstellung einer aktiven Anti-Eis-Beschichtung aus dem gemäß Fig. 3 hergestellten Beschichtungsmaterial mit einer Vergrößerung eines Anti-Eis-Mittelreservoirs;
- Fig. 5: eine vergrößerte Darstellung des Anti-Eis-Mittelreservoirs;
- Fig. 6: eine schematische Darstellung einer aktiven Anti-Eis- Beschichtung, wie sie mit dem Verfahren gemäß den Fig. 2 bis 5 hergestellt ist, mit einer Vergrößerung eines Anti-Eis-Mittelreservoirs; und
- Fig. 7: eine vergrößerte Darstellung eines Teilbereichs der aktiven Anti-Eis-Beschichtung.

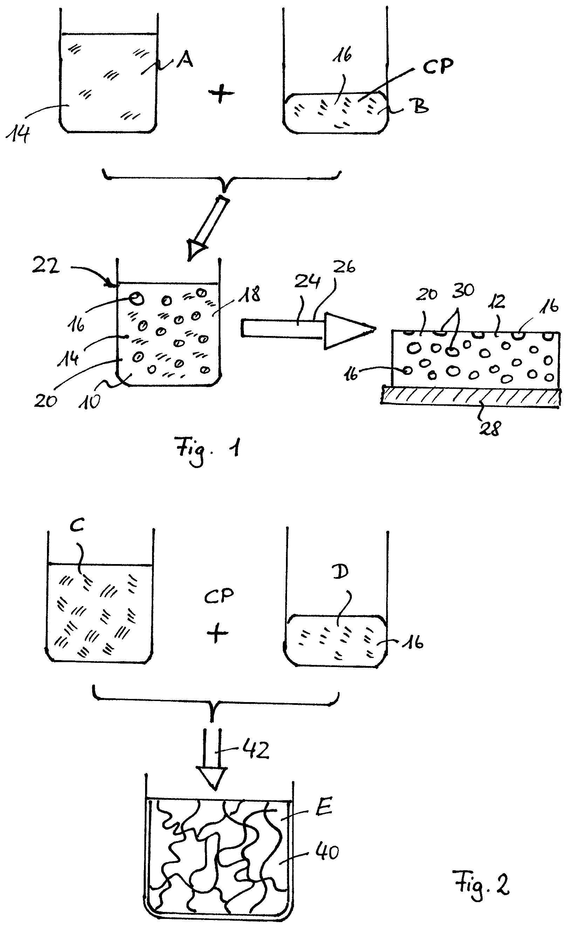

Im Folgenden wird anhand der Darstellung in Fig. 1 die Herstellung einer ersten Generation einer biphasischen UV-härtbaren Anti-Eis-Beschichtung 14 beschrieben. Dabei geht man von 80 bis 97 Gew.-% einer ersten Komponente A und 3 bis 20 Gew.-% einer zweiten Komponente B aus, die über Copolymere CP miteinander zu einem Beschichtungsmaterial 10 zum Bilden einer aktiven Anti-Eis- Beschichtung 12 verbunden werden.

Als erste Komponente A wird insbesondere eine flüssige UV-härtbare Beschichtung 14 verwendet. Zum Bilden der zweiten Komponente B wird eine Anti-Eis-Flüssigkeit 16 vorgesehen, welche eine gefrierpunktherabsetzende Eigenschaft hat.

Beispiele für mögliche Anti-Eis-Flüssigkeiten 16 sind in der US 2014/0127516 A1, [0058], beschrieben.

Die Komponente B enthält außerdem die Copolymere CP mit 5 bis 20 Gew.-% (bezogen auf die Masse von B).

Gemäß einer bevorzugten Ausführungsform wird als erste Komponente A eine photoinduziert aushärtende Flüssigkeit aus 60 bis 80 Gew.-% PUA (PolyurethanDiacrylat, Polyurethanacrylat) und 20 bis 40 Gew.-% Monomeren verwendet. Dieser werden 0,5 bis 5 Gew.-% (bezogen auf die Gesamtmasse von PUA und Monomeren) Photoinitiatoren und eventuell 0 bis 2 % Gew.-% (bezogen auf die Gesamtmasse von PUA und Monomeren) Zusatzstoffe zugesetzt.

Im Ergebnis ergibt sich eine Emulsion 18 aus der ersten Komponente A als Matrixmaterial 20 und darin dispergierter Anti-Eis-Flüssigkeit 16 als Komponente B. Die Emulsion 18 aus Matrixmaterial 20 und darin dispergierter Anti-Eis-Flüssigkeit 16 stellt eine flüssige UV-härtbare Rezeptur 22 dar. Durch Auftragen 24 der Rezeptur 22 und Anwendung von UV-Licht zum UV-Härten 26 ergibt sich die aktive Anti-Eis-Beschichtung 12 auf einem Substrat 28. Als Substrat 28 können Oberflächenbereiche von Fahrzeugen und Luftfahrzeugen, von Rotoren und Windkraftanlagen oder dergleichen dienen.

Die aktive Anti-Eis-Beschichtung 12 hat Anti-Eis-Mittel-Reservoire 30, die in dem UV-härtbaren Matrixmaterial 20 eingebettet sind. In den Anti-Eis-Mittel-Reservoiren 30 befindet sich die Anti-Eis-Flüssigkeit 16. Die Anti-Eis-Mittel- Reservoire 30 geben an der Oberfläche der Anti-Eis-Beschichtung 12 die Anti-Eis- Flüssigkeit 16 ab. Beim Erodieren der aktiven Anti-Eis-Beschichtung 12 werden immer wieder neue Anti-Eis-Mittel-Reservoire 30 frei.

Die Anwesenheit der Anti-Eis-Flüssigkeit 16 an der Oberfläche der Anti-Eis- Beschichtung 12 führt zur Vermeidung oder der Verzögerung einer Ausbildung von Eis.

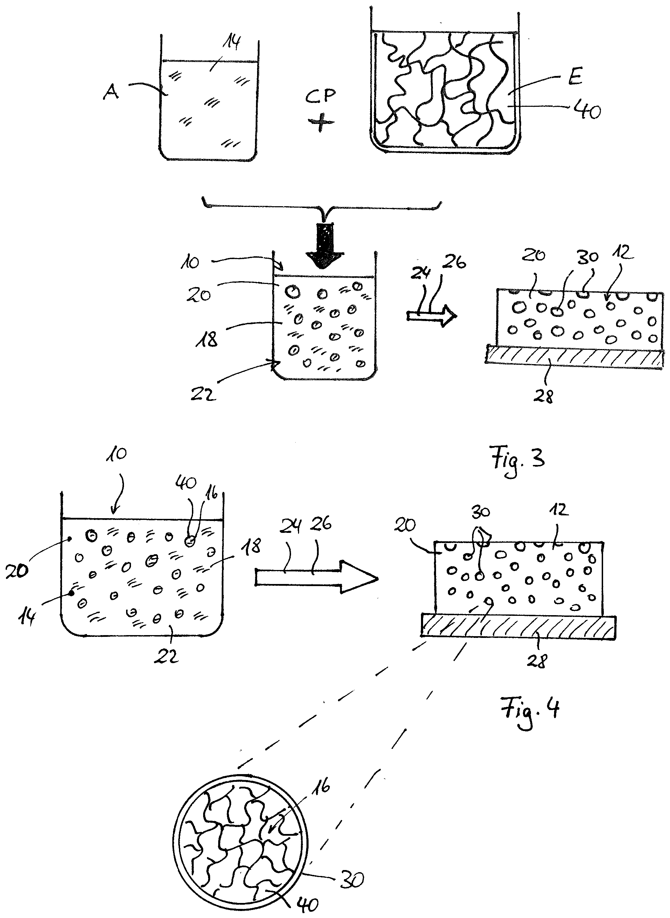

Im Folgenden wird anhand der Darstellung in den Fig. 2 bis 4 ein Verfahren zum Herstellen einer zweiten Generation einer biphasischen UV-härtbaren Beschichtung, basierend auf UV-Glycogel 40, näher erläutert. Das Verfahren läuft in zwei Schritten ab. Ein erster Schritt ist dabei in Fig. 2 angegeben, während ein zweiter Schritt in Fig. 3 gezeigt ist.

Der erste Schritt betrifft die Synthese eines UV-Glycogels 40. Der zweite Schritt betrifft die Dispersion des UV-Glycogels 40 in der UV-härtbaren Formulierung der ersten Komponente A.

Wie in Fig. 2 ersichtlich, geht man bei dem ersten Schritt zum Bilden des UV-Glycogels 40 von einer dritten Komponente C und einer vierten Komponente D aus, die über Copolymere CP und UV-Anwendung zu dem UV-Glycogel 40 verbunden werden.

Als dritte Komponente C dienen UV-härtbare Monomere, beispielsweise auf Basis von Polyethylenglykol (PEG).

Als Komponente D wird die gewünschte Anti-Eis-Flüssigkeit 16 eingesetzt. In einem Beispiel wird hierzu Ethylenglycol (EG) verwendet. Weitere Beispiele für mögliche Anti-Eis-Flüssigkeiten 16 sind in der US 2014/0127516 A1, [0058], beschrieben.

Beispielhafte Anteile am Gewicht des Glycogels liegen bei 80 bis 95 %, vorzugsweise 80 bis 90 %, für die dritte Komponente D (Eisflüssigkeit 16) und bei 5 bis 20 %, vorzugsweise 10 bis 20 %, für die vierte Komponente C (UV-härtbare Monomere).

Durch UV-Anwendung 42 entsteht aus dem Gemenge aus der dritte Komponente C und der vierten Komponente D das UV-Glycogel 40 mit darin eingefangener oder eingeschlossener Anti-Eis-Flüssigkeit 16. Dieses UV-Glycogel 40 bildet eine fünfte Komponente E zur Anwendung in dem zweiten Schritt, der im Folgenden anhand der Fig. 3 näher erläutert wird. Die fünfte Komponente E ist ein Beispiel für ein Anti-Eis-Mittel.

In diesem zweiten Schritt wird aus der ersten Komponente A - wie oben näher spezifiziert - und der fünften Komponente E (UV-Glycogel 40) eine Emulsion 18 gebildet. Zum Beispiel werden bezogen auf die Gesamtmasse der Emulsion 18 10 bis 20 Gew.-% in 80 bis 90 Gew.-% der Komponente A gemischt.

In der Emulsion 18 gemäß Fig. 3 sind in dem noch flüssigen UV-härtbaren Matrixmaterial 20 das UV-Glycogel 40 und die darin eingefangene Anti-Eis-Flüssigkeit 16 dispergiert.

Die Emulsion 18 bildet das Beschichtungsmaterial 10, aus der durch Auftragen 24 und UV-Härten 26 die aktive Anti-Eis-Beschichtung 12 herstellbar ist. 80 bis 90 Gew.-% der Emulsion 18 bilden die erste Komponente A. Als erste Komponente A dient eine flüssige UV-härtbare Beschichtung, beispielsweise mit einer Zusammensetzung von 60 bis 80 Gew.-% PUA, 20 bis 40 Gew.-% Monomeren. Dieser werden - bezogen auf die Gesamtmenge von PUA und Monomeren - 0,5 bis 5 Gew.-% Photoinitiatoren und 0 bis 2% Gew.-% Additive zugesetzt.

Die fünfte Komponente E kann bei unterschiedlichen Ausgestaltungen mit einem Gewichtsanteil von 10 bis 20% in die Emulsion 18 dispergiert werden. Die fünfte Komponente E ist insbesondere durch das UV-Glycogel 40 mit darin gefangener Anti-Eis-Flüssigkeit 16 gebildet.

In einem Beispiel ist die fünfte Komponente E aus Acrylat-Monomeren aus der Komponente C, der Photoinitiatoren und eventuell Zusatzstoffe zugesetzt sein können, und Anti-Eis-Flüssigkeit aus der Komponente D gebildet.

Das als Emulsion 18 vorliegende Beschichtungsmaterial 10 bildet dann eine flüssige UV-härtbare Rezeptur 22, die durch Auftragen 24 und UV-Härten 26 zu der aktiven Anti-Eis-Beschichtung 12 auf dem Substrat 28 wird.

In dem UV-Glycogel 40 ist die Anti-Eis-Flüssigkeit 16 ebenfalls in einer UV- härtbaren Matrix eingeschlossen oder gefangen.

In der fertig hergestellten aktiven Anti-Eis-Beschichtung 12 befinden sich demnach die Anti-Eis-Mittel-Reservoire 30 mit in Matrixmaterial 20, 40 eingeschlossener oder gefangener Anti-Eis-Flüssigkeit 16, um an der Oberfläche entsprechend Anti-Eis-Flüssigkeit 16 abzugeben.

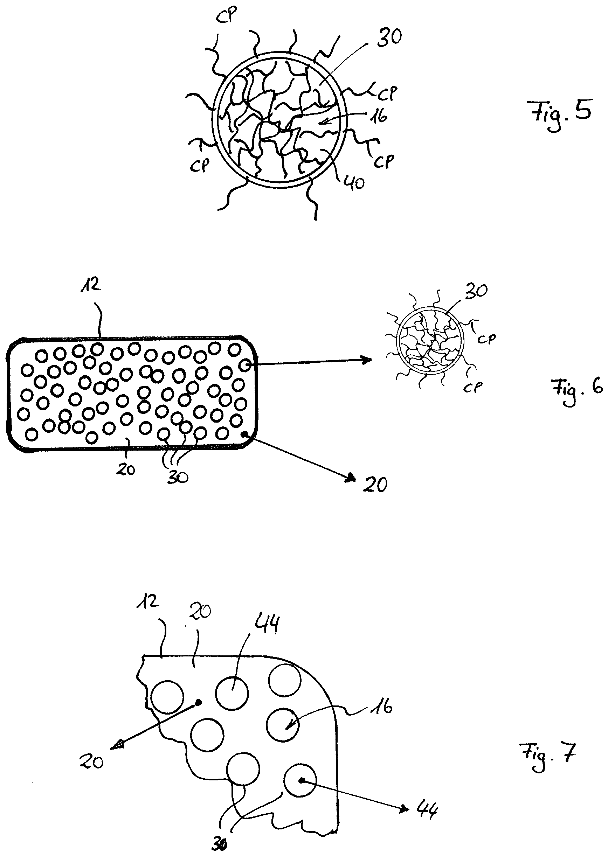

Fig. 4 und 5 zeigen eine Vergrößerung der Anti-Eis-Mittel-Reservoire 30. Im Inneren befinden sich Anti-Eis-Flüssigkeit 16 und Monomere, die an der Außenseite über Copolymere CP mit dem Matrixmaterial 20 verbunden sind.

In der fertigen Anti-Eis-Beschichtung 12 ist somit das UV-gehärtete Matrixmaterial der ersten Komponente A mit einer darin eingebetteten Anti-Gefrier-Phase 44 vorgesehen. In einem Ausführungsbeispiel umfasst diese Anti-Gefrier-Phase 44, die die Anti-Eis-Mittel-Reservoire 30 bildet, 1 bis 20% Anti-Eis-Flüssigkeit 16,0 bis 20 % Monomere und 0 bis 5 % Photoinitiatoren sowie Copolymer-Tenside.

Dadurch wird eine aktive Anti-Eis-Beschichtung 12 mit hervorragender Erosionswiderstandskraft und gekapselten Anti-Eis-Mittel-Reservoiren 30 erhalten, die eine langanhaltende fortschreitende Abgabe von Anti-Eis-Flüssigkeit 16 während des Gebrauchs der Anti-Eis-Beschichtung 12 ermöglicht.

Im Folgenden werden konkrete Beispiele von UV-härtbaren Beschichtungsmaterialien zum Bilden einer Anti-Eis-Beschichtung angegeben, die mit einem der zuvor erläuterten Herstellverfahren erhalten werden.

### Beispiel 1:

Als Komponente A wird eine UV-härtbare erste Matrix I mit folgender Zusammensetzung hergestellt:

| | |
|---|---|
| PUA-UVU 9321 HD12 von der Firma Polymer Technology | 58 % |
| Photomer 4172F von der Firma Cognis | 20 % |
| Bisomer PEA6 von der Firma Cognis | 10 % |
| SR 268US von der Firma Sartomer | 10 % |
| TPO (Pi) Photoinitator von der Firma BASF | 2 % |

Daraus wird gemäß dem oben genannten Verfahren der ersten Generation ein Beschichtungsmaterial mit folgender Zusammensetzung hergestellt:

| | |
|---|---|
| UV-härtbare erste Matrix I | 89,3 % |
| Copolymer-Tenside | 1,8 % |
| Ehylenglykol | 8,9 % |

### Beispiel 2:

Als Komponente A wird eine UV-härtbare zweite Matrix II mit folgender Zusammensetzung hergestellt:

| | |
|---|---|
| UVP 6021-HD15 4 von der Firma Ssunin | 77,2 % |
| SR 355 von der Firma Arkema | 8,7 % |
| Si. acrylate A von der Firma Bluestar | 2,3 % |
| Butyla-Acrylate Monomere von der Firma Aldrich | 10 % |
| Chivacure 173 von der Firma Chitec | 1,8 % |

Daraus wird gemäß dem der oben genannten Verfahren der ersten Generation ein Beschichtungsmaterial mit folgender Zusammensetzung hergestellt:

| | |
|---|---|
| UV-härtbare zweite Matrix II | 89,3 % |
| Copoloymer-Tenside | 1,8 % |
| Ehylenglykol | 8,9 % |

### Beispiel 3:

Als Komponente A wird eine UV-härtbare dritte Matrix III mit folgender Zusammensetzung hergestellt:

| | |
|---|---|
| UVP 6021-HD15 von der Firma Ssunin | 88 % |
| SR 355 von der Firma Arkema | 10 % |
| Chivacure 173 von der Firma Chitec | 2 % |

Daraus wird gemäß dem oben genannten Verfahren der ersten Generation ein Beschichtungsmaterial mit folgender Zusammensetzung hergestellt:

| | |
|---|---|
| UV-härtbare dritte Matrix III | 87,5 % |
| Copoloymer-Tenside | 2,5 % |
| Ehylenglykol | 10 % |

In den Beispielen wird Ethylen-Glycol als Anti-Eis-Flüssigkeit verwendet, die in einer UV-härtbaren Matrix eingebettet ist.

Bei Versuchen zeigte das Beschichtungsmaterial von Beispiel 1 den geringsten Eisanhaftungswert; die Beispiel 2 und 3 zeigten auch vielversprechende Resultate.

Die Verfahrensweise nach der zweiten Generation wie oben beschrieben unterscheidet sich von den zuvor genannten Beispielen noch dadurch, dass die Anti-Eis-Flüssigkeit zunächst in einem UV-polymerisierbaren Gel eingefangen und dieses Gemisch dann (anstelle der Anti-Eis-Flüssigkeit in den Beispielen 1 bis 3) mit der Matrix zu einer Emulsion verarbeitet wird.

Im Folgenden werden konkrete Beispiele für die zweite Generation näher erläutert.

### Beispiel 4:

Als Komponente E wird ein Glycogel (bezeichnet als Glycogel 131) mit folgender Zusammensetzung synthetisiert:

| | |
|---|---|
| SR610 von der Firma Arkema | 1,96 % |
| Bisomer PEA von der Firma GEO Speciality Chemicals | 7,84 % |
| Irgacure 2959 von der Firma BASF | 0,2 % |
| EG (Ethylenglykol) | 90 % |

Zum Herstellen des Glycogels werden die Substanzen gemischt und einer UV- Bestrahlung mit einer UV-Dosis von 5000 mJ zur Fusion bzw. Gelbildung unterworfen.

Als Komponente A wird eine UV-härtbare vierte Matrix IV mit folgender Zusammensetzung hergestellt:

| | |
|---|---|
| PUA-UVU 9321HD12 von der Firma Polymer Technology | 58 % |
| Photomer 4172F von der Firma Cognis | 20 % |
| Bisomer PEA6 von der Firma Cognis | 10 % |
| SR 268US von der Firma Sartomer | 10 % |
| Chivacure 173 der Firma Chitec | 2 % |

Anschließend wird aus der Matrix IV und dem Glycogel 131 (Komponenten A und E) eine Emulsion mit folgender Zusammensetzung hergestellt:

| | |
|---|---|
| UV-härtbare Matrix IV | 88,2 % |
| Copolymer-Surfactant (Copolymer-Tenside) | 2 % |
| Glycogel 131 | 8,9 %. |

### Beispiel 5:

Als Komponente E wird ein Glycogel (bezeichnet als Glycogel 121) mit folgender Zusammensetzung synthetisiert:

| | |
|---|---|
| SR344 der Firma Arkema | 2 % |
| Bisomer PEA der Firma GEO Speciality Chemicals | 7,8 % |
| Irgacure 2959 der Firma BASF | 0,2 % |
| EG (Ethylenglycol) | 90 % |

Zum Herstellen des Glycogels werden die Substanzen gemischt und einer UV-Bestrahlung mit einer UV-Dosis von 1000 mJ zur Fusion bzw. Gelbildung unterworfen.

Als Komponente A wird eine UV-härtbare fünfte Matrix V mit folgender Zusammensetzung hergestellt:

| | |
|---|---|
| UVP 6021-HD15 4 von der Firma Ssunin | 88 % |
| SR 355 von der Firma Arkema | 10 % |
| Chivacure 173 von der Firma Chitec | 2 % |

Anschließend wird aus der Matrix V und dem Glycogel 121 (Komponenten A und E) eine Emulsion mit folgender Zusammensetzung hergestellt:

| | |
|---|---|
| UV-härtbare Matrix V | 88,2 % |
| Copolymer-Surfactant (Copolymer-Tenside) | 2 % |
| Glycogel 121 | 8,9 %. |

Die UV-härtende Fusion in den Beispielen 4 und 5 wurden durchgeführt mit einem "Arc bulb LC6B Benchtop Conveyor".

### Bezugszeichenliste:

- A: erste Komponente
- B: zweite Komponente
- C: dritte Komponente
- D: vierte Komponente
- E: fünfte Komponente
- CP: Copolymere
- 10: Beschichtungsmaterial
- 12: aktive Anti-Eis-Beschichtung
- 14: flüssige UV-härtbare Beschichtung
- 16: Anti-Eis-Flüssigkeit
- 18: Emulsion
- 20: Matrixmaterial
- 22: flüssige UV-härtbare Rezeptur
- 24: Auftragen
- 26: UV-Härten
- 28: Substrat
- 30: Anti-Eis-Mittel-Reservoir
- 40: UV-Glycogel
- 42: UV-Anwendung
- 44: Antigefrierphase

## Patentansprüche

1. Aktive Anti-Eis-Beschichtung (12), die zur Abgabe eines Anti-Eismittels fähig ist, mit in einem UV-gehärteten Matrixmaterial (20) eingebettete Anti-Eis-Mittel-Reservoiren (30),
**dadurch gekennzeichnet,**
**dass** die in dem Matrixmaterial (20) eingebetteten Anti-Eis-Mittel-Reservoire (30) aus einem UV-härtbaren Material gebildet sind, in dem eine Anti-Eis-Flüssigkeit (16) eingefangen oder eingeschlossen ist.

2. Anti-Eis-Beschichtung (12) nach Anspruch 1, **dadurch gekennzeichnet, dass** sie 3 bis 20 Gew.-%, vorzugsweise 5 bis 20 Gew.-%, Anti-Eis-Flüssigkeit (16) als Anti-Eis-Mittel umfasst.

3. Anti-Eis-Beschichtung (12) nach einem der voranstehenden Ansprüche, **dadurch gekennzeichnet,**
**dass** das UV-gehärtete Matrixmaterial (20) umfasst:
60 - 80 Gew.-% Polyurethandiacrylate und
20 - 40 Gew.-% Monomere,
wobei bezogen auf die Gesamtmasse von Polyurethandiacrylate und Monomere weiter
0,5 - 5 Gew.-% Photoinitiatoren und
0 - 2 Gew.-% Zusatzstoffe
vorgesehen sind.

4. Beschichtungsmaterial (10) zum Bilden einer Anti-Eis-Beschichtung (12) nach einem der voranstehenden Ansprüche, umfassend eine nicht-wässrige photopolymerisierbare Emulsion (18) mit einem flüssigen photopolymerisierbaren Matrixmaterial (20) als eine erste Phase und einem photopolymerisierbaren Gel, das Anti-Eis-Flüssigkeit (16) enthält, als eine zweite Phase.

5. Beschichtungsmaterial (10) nach Anspruch 4,
**dadurch gekennzeichnet,**
**dass** die zweite Phase Block-Copolymer-Tenside enthält und/oder auf photopolymerisierbaren PEG beruht.

6. Verfahren zum Herstellen eines Anti-Eis-Beschichtungsmaterials (10) zum Bilden einer Anti-Eis-Beschichtung (12), umfassend:
a) Bereitstellen eines flüssigen photopolymerisierbaren Matrixmaterials (20),
b) Bereitstellen eines Anti-Eis-Mittels durch Bereitstellen einer Anti-Eis-Flüssigkeit (16) und eines UV-härtbaren Gelbildnermaterials und Synthetisieren eines UV-härtbaren Gels, das die Anti-Eis-Flüssigkeit (16) enthält,
c) Einbringen des Anti-Eis-Mittels in das flüssige photopolymerisierbare Matrixmaterial (20).

7. Verfahren nach Anspruch 6,
**dadurch gekennzeichnet,**
**dass** Schritt a) wenigstens einen, mehrere oder alle der folgenden Schritte enthält:
a1) Bereitstellen des Matrixmaterials (20) derart, dass es 80 - 97 Gew.-% des Anti-Eis-Beschichtungsmaterials (10) ausmacht und/oder
a2) Bereitstellen eines Matrixmaterials (20), enthaltend:
60 - 80 Gew.-% Polyurethandiacrylat und
20 - 40 Gew.-% Monomere,
wobei weiter, bezogen auf das Gesamtgewicht von Polyurethandiacrylat und Monomeren
0,5 - 5 Gew.-% Photoinitiatoren und
0 - 2 Gew.-% Additive
vorgesehen werden.

8. Verfahren nach Anspruch 7,
**dadurch gekennzeichnet**,
8.1 dass in Schritt b) ein Matrixmaterial (20) enthaltend 80-95 Gew.-% Acrylate-Monomere, 0,5 - 5 Gew.-% Photoinitiatoren und 0 - 2 Gew.-% Zusatzstoffe bereitgestellt wird, und/oder
8.2 dass der Anteil von Anti-Eis-Flüssigkeit (16) in dem Anti-Eis-Mittel 80 - 90 Gew.-% beträgt, und/oder
8.3 dass in Schritt b ein UV-härtbares Glycogel (40) mit durch Tenside eingefangener oder eingeschlossener Anti-Eis-Flüssigkeit (16) als Anti-Eis-Mittel gebildet wird.

9. Verfahren nach einem der Ansprüche 6 bis 8 ,
enthaltend:
Bilden einer photopolymerisierbaren nicht-wässrigen Emulsion (18) mit einem photopolymerisierbaren flüssigen Matrixmaterial (20) als erste Phase und einem photopolymerisierbaren Gelmaterial als zweite Phase, in dem eine Anti-Eis-Flüssigkeit (16) eingebettet ist.

10. Verfahren zum Herstellen einer Anti-Eis-Beschichtung (12), umfassend:
Durchführen eines Verfahrens nach einem der Ansprüche 6 bis 9 zum Bereitstellen eines Beschichtungsmaterials (10) oder Bereitstellen eines Beschichtungsmaterials (10) nach einem der Ansprüche 4 oder 5 und Aufbringen des Beschichtungsmaterials (10) auf eine zu beschichtende Oberfläche und UV-Aushärten (26) des Beschichtungsmaterials (10).

11. Fahrzeug, Luftfahrzeug oder Rotor oder Windkraftanlage, umfassend einen Oberflächenbereich, der zumindest teilweise mit einer Anti-Eis-Beschichtung (12) nach einem der Ansprüche 1 bis 3 oder hergestellt mit dem Verfahren nach Anspruch 10 versehen ist.

## Claims

1. An active anti-icing coating (12) capable of delivering an anti-icing agent, having anti-icing agent reservoirs (30) embedded in a UV-cured matrix material (20),
**characterized in**
**that** the anti-icing agent reservoirs (30) embedded in the matrix material (20) are formed of a UV-curable material in which an anti-icing liquid (16) is trapped or enclosed.

2. The anti-ice coating (12) according to claim 1, **characterized in that** it comprises 3 to 20% by weight, preferably 5 to 20% by weight, of anti-ice liquid (16) as anti-ice agent.

3. The anti-ice coating (12) according to any one of the preceding claims, **characterized in,**
**that** the UV-cured matrix material (20) comprises:
60 - 80% by weight of polyurethane diacrylates; and
20 - 40% by weight of monomers,
wherein, based on the total weight of polyurethane diacrylates and monomers, furthermore
0.5 - 5% by weight of photoinitiators and
0 - 2% by weight of additives
are provided.

4. A coating material (10) for forming an anti-ice coating (12) according to any one of the preceding claims, comprising a non-aqueous photopolymerizable emulsion (18) having a liquid photopolymerizable matrix material (20) as a first phase and a photopolymerizable gel containing anti-ice liquid (16) as a second phase.

5. The coating material (10) according to claim 4,
**characterized in,**
**that** the second phase contains block copolymer surfactants and/or is based on photopolymerizable PEG.

6. A method of preparing an anti-ice coating material (10) for forming an anti-ice coating (12), comprising:
a) providing a liquid photopolymerizable matrix material (20),
b) providing an anti-ice agent by providing an anti-ice liquid (16) and a UV curable gel former material and synthesizing a UV curable gel containing the anti-ice liquid (16),
c) incorporating the anti-icing agent into the liquid photopolymerizable matrix material (20).

7. The method according to claim 6,
**characterized in,**
**that** step a) comprises at least one or more or all of the following steps:
a1) providing the matrix material (20) such that it constitutes 80-97% by weight of the anti-icing coating material (10), and/or
a2) providing a matrix material (20) comprising:
60 - 80% by weight of polyurethane diacrylate and.
20 - 40% by weight of monomers,
wherein furthermore, based on the total weight of polyurethane diacrylate and monomers,
0.5 - 5% by weight of photoinitiators and
0 - 2% by weight of additives
are provided.

8. The method according to claim 7,
**characterized in**,
8.1 that in step b) a matrix material (20) containing 80-95% by weight of acrylate monomers, 0.5-5% by weight of photoinitiators and 0-2% by weight of additives is provided, and/or
8.2 that the proportion of anti-icing liquid (16) in the anti-icing agent is 80-90% by weight, and/or
8.3 that in step leg UV-curable glycogel (40) with anti-icing liquid (16) captured or entrapped by surfactants is formed as anti-icing agent.

9. The method according to any one of claims 6 to 8, comprising:
forming a photopolymerizable non-aqueous emulsion (18) having a photopolymerizable liquid matrix material (20) as a first phase and a photopolymerizable gel material as a second phase having an anti-icing liquid (16) embedded therein.

10. A method of producing an anti-ice coating (12), comprising:
performing a method according to any one of claims 6 to 9 for providing a coating material (10) or providing a coating material (10) according to any one of claims 4 or 5 and applying the coating material (10) to a surface to be coated and UV curing (26) the coating material (10).

11. A vehicle, aircraft or rotor or wind turbine comprising a surface area at least partially provided with an anti-ice coating (12) according to any one of claims 1 to 3 or produced by the method according to claim 10.

## Revendications

1. Revêtement anti-givrage actif (12) capable de délivrer un agent anti-givrage, comportant des réservoirs d'agent anti-givrage (30) noyés dans un matériau matriciel durci aux UV (20),
**caractérisé en ce,**
**que** les réservoirs d'agent anti-givrage (30) noyés dans le matériau de matrice (20) sont formés d'un matériau durcissable aux UV dans lequel un liquide antigivrage (16) est piégé ou enfermé.

2. Revêtement anti-glace (12) selon la revendication 1, **caractérisé en ce qu'**il comprend 3 à 20% en poids, de préférence 5 à 20% en poids, de liquide anti-glace (16) comme agent anti-glace.

3. Revêtement anti-glace (12) selon l'une quelconque des revendications précédentes,
**caractérisé en ce,**
**que** le matériau de matrice durci aux UV (20) comprend:
60 à 80% en poids de diacrylates de polyuréthane; et
20 à 40% en poids de monomères,
dans lesquels, sur la base du poids total de polyuréthanne diacrylates et monomères, en outre
0,5 à 5% en poids de photo-initiateurs et
0 à 2% en poids d'additifs
sont fournis.

4. Matériau de revêtement (10) pour former un revêtement anti-glace (12) selon l'une quelconque des revendications précédentes, comprenant une émulsion photopolymérisable non aqueuse (18) ayant un matériau de matrice photopolymérisable liquide (20) comme première phase. et un gel photopolymérisable contenant un liquide anti-glace (16) comme seconde phase.

5. Matériau de revêtement (10) selon la revendication 4,
**caractérisé en ce,**
**que** la deuxième phase contient des tensioactifs copolymères à blocs et / ou est à base de PEG photopolymérisable.

6. Procédé de préparation d'un matériau de revêtement anti-glace (10) pour former un revêtement anti-glace (12), comprenant:
a) la fourniture d'un matériau de matrice photopolymérisable liquide (20),
b) la fourniture d'un agent anti-glace en fournissant un liquide anti-glace (16) et un matériau de formation de gel durcissable aux UV et synthétisant un gel durcissable aux UV contenant le liquide anti-glace (16),
c) incorporant l'agent anti-givrage dans le matériau de matrice photopolymérisable liquide (20).

7. Procédé selon la revendication 6,
**caractérisé en ce,**
**que** l'étape a) comprend au moins une ou plusieurs ou toutes les étapes suivantes:
a1) fourniture du matériau de matrice (20) de telle sorte qu'il constitue 80 à 97% en poids du un matériau de revêtement anti-givrage (10), et / ou
a2) fournissant un matériau de matrice (20) comprenant:
60 à 80% en poids de diacrylate de polyuréthane et.
20 à 40% en poids de monomères,
où en outre, sur la base du poids total de polyuréthanne diacrylate et de monomères,
0,5 à 5% en poids de photo-initiateurs et
0 à 2% en poids d'additifs
sont fournis.

8. Procédé selon la revendication 7,
caractérisé en,
8.1 que dans l'étape b) un matériau de matrice (20) contenant 80-95% en poids de monomères acrylate, 0,5-5% en poids de photo-initiateurs et 0-2% en poids d'additifs est fourni, et / ou
8.2 que la proportion de liquide anti-givrage (16) dans l'agent anti-givrage soit de 80 à 90% en poids, et / ou
8.3 celle de l'étape leg glycogel durcissable aux UV (40) avec un liquide antigivrant (16) capturé ou piégé par des tensioactifs est formé comme agent antigivrant.

9. Procédé selon l'une quelconque des revendications 6 à 8, comprenant: la
formation d'une émulsion non aqueuse photopolymérisable (18) ayant un matériau de matrice liquide photopolymérisable (20) en tant que première phase et un matériau de gel photopolymérisable en tant que seconde phase ayant un liquide antigivrage (16) incorporé à l'intérieur.

10. Procédé de production d'un revêtement anti-glace (12), comprenant: la mise en oeuvre
d'un procédé selon l'une quelconque des revendications 6 à 9 pour fournir un matériau de revêtement (10) ou fournir un matériau de revêtement (10) selon l'une quelconque des les revendications 4 ou 5 et appliquer le matériau de revêtement (10) sur une surface à revêtir et durcir aux UV (26) le matériau de revêtement (10).

11. Véhicule, aéronef ou rotor ou éolienne comprenant une surface au moins partiellement pourvue d'un revêtement anti-glace (12) selon l'une quelconque des revendications 1 à 3 ou réalisé par le procédé selon la revendication 10.
